# EUROPEAN PATENT APPLICATION

(11) **EP 4 848 086 A1**
(43) Date of publication of application: **02.12.2026**
(21) Application number: 25757540.7
(22) Date of filing: 02.01.2025
(51) Int. Cl.: G06F 9/48

(54) **TASK PROCESSING APPARATUS, TASK PROCESSING METHOD, AND DEVICE**

(30) Priority: 21.02.2024 CN 202410196061
(71) Applicant: Huawei Technologies Co., Ltd., Shenzhen, Guangdong 518129 (CN)
(72) Inventor: WANG, Ronghua, Shenzhen, Guangdong 518129 (CN); ZHOU, Yongbin, Shenzhen, Guangdong 518129 (CN); WEI, Wei, Shenzhen, Guangdong 518129 (CN)
(74) Representative: Thun, Clemens
(86) International application number: PCT/CN2025/070170
(87) International publication number: WO 2025/175942

(57) **Abstract**

Embodiments of this application provide a task processing apparatus, a task processing method, and a device, and relate to the field of electronic technologies, to provide more precise resource control for different task scenarios and different phases of a same task. The task processing apparatus includes: at least one processing core, configured to output a plurality of resource tags corresponding to a plurality of task instances, where each resource tag corresponds to at least one task instance, and the plurality of task instances include a subtask of one or more tasks; a first storage apparatus, configured to: cache a plurality of pieces of task information corresponding to the plurality of resource tags, and determine a storage parameter of each of the plurality of pieces of task information; and a control apparatus, configured to output control information of any piece of task information in the plurality of pieces of task information, where the control information is used to adjust a storage parameter of the task information in the first storage apparatus.

## Description

This application claims priority to Chinese Patent Application No. 202410196061.3, filed with the China National Intellectual Property Administration on February 21, 2024 and entitled "TASK PROCESSING APPARATUS, TASK PROCESSING METHOD, AND DEVICE", which is incorporated herein by reference in its entirety.

### TECHNICAL FIELD

This application relates to the field of electronic technologies, and in particular, to a task processing apparatus, a task processing method, and a device.

### BACKGROUND

During operation, a processor system usually executes a plurality of different tasks at the same time. Different tasks or different phases of the same task may have different performance requirements, such as requirements for quality of service (quality of service, QoS), requirements for processor resources, and requirements for energy efficiency. Currently, in task processing of the processor system, only a processing core, a thread, or the like in the processor system can be used as a control object, and precise resource control cannot be provided for different task scenarios or different phases of the same task.

### SUMMARY

This application provides a task processing apparatus, a task processing method, and a device, to provide more precise resource control for different task scenarios and different phases of a same task.

To achieve the foregoing objective, the following technical solutions are used in embodiments of this application.

According to a first aspect, a task processing apparatus is provided. The task processing apparatus includes at least one processing core, configured to output a plurality of resource tags corresponding to a plurality of task instances, where each resource tag identifies at least one task instance that uses a same resource (that is, each resource tag corresponds to at least one task instance), and the task instance may be referred to as a subtask, for example, the task instance may include but is not limited to a process, a thread, an executed function, an accessed memory address, and communication between threads; a first storage apparatus, configured to: cache a plurality of pieces of task information corresponding to the plurality of resource tags, and determine a storage parameter of each of the plurality of pieces of task information, where each resource tag corresponds to one piece of task information, the task information includes information about the at least one task instance identified by the resource tag, and the information includes data, an instruction, and/or the like; and a control apparatus, configured to output control information of any piece of task information in the plurality of pieces of task information, where the control information is used to adjust a storage parameter of the task information in the first storage apparatus, that is, control a resource used for the task information in the first storage apparatus, and the storage parameter includes at least one of the following: a miss rate, an access bandwidth, an access delay, a total occupied capacity, and a probability of being replaced. Optionally, the at least one task instance identified by each resource tag includes at least one task instance in a same scenario, and different resource tags may identify task instances in different task scenarios or different phases.

In the foregoing technical solution, the at least one processing core is configured to output the plurality of resource tags corresponding to the plurality of task instances, the first storage apparatus is configured to: cache the plurality of pieces of task information corresponding to the plurality of resource tags and determine the storage parameter of each piece of task information, and the control apparatus is configured to adjust the storage parameter of any piece of task information in the first storage apparatus, so that the control apparatus can control, at a granularity of a resource tag, a resource used for the task information corresponding to each resource tag. In this way, when different resource tags correspond to task instances in different task scenarios or different phases of a same task, fine-granularity resource management and control can be provided for the different task scenarios or the different phases of the same task, to ensure QoS of the task, improve resource scheduling rationality and system energy efficiency, and further improve task processing performance.

In a possible implementation of the first aspect, the at least one processing core is further configured to output a plurality of load and store instructions that carry the plurality of resource tags, where each load and store instruction includes a load instruction and/or a store instruction; and the first storage apparatus is further configured to: transmit and cache, according to the plurality of load and store instructions, the plurality of pieces of task information corresponding to the plurality of resource tags. In the foregoing possible implementation, the at least one processing core outputs a resource tag according to a load and store instruction, to transmit the resource tag to the first storage apparatus, so that the first storage apparatus can collect statistics on a storage parameter of task information at a granularity of a resource tag, to control resources used for task information of different resource tags.

In a possible implementation of the first aspect, the at least one processing core includes a first processing core, the first storage apparatus includes a first cache apparatus (or referred to as a private cache apparatus) coupled to the first processing core, and the first cache apparatus includes: a first cache, configured to cache at least one piece of task information, where the at least one piece of task information includes task information corresponding to a resource tag output by the first processing core; a first monitor, configured to detect a storage parameter of each piece of task information in the at least one piece of task information in the first cache; and a first actuator, configured to adjust a storage parameter of first task information in the first cache based on first control information, where the first control information is output by the control apparatus for the first task information, and the at least one piece of task information includes the first task information. Optionally, the first cache apparatus may include a level-1 cache apparatus and/or a level-2 cache apparatus, and each level of cache apparatus may include a monitor and an actuator thereof. In the foregoing possible implementation, a first cache apparatus corresponding to each processing core may detect, via a monitor, a storage parameter of task information cached by the first cache apparatus, and receive, via an actuator, control information sent by the control apparatus, and control a resource used for task information cached by the first cache apparatus, so that a resource in the private cache apparatus of each processing core can be controlled at a granularity of a resource tag, thereby improving scheduling rationality and energy efficiency of the resource in the private cache apparatus.

In a possible implementation of the first aspect, the at least one processing core further includes a second processing core, the first storage apparatus further includes a second cache apparatus (or referred to as a shared cache apparatus) coupled to both the first processing core and the second processing core, and the second cache apparatus includes: a second cache, configured to cache at least two pieces of task information, where the at least two pieces of task information include task information corresponding to resource tags output by the first processing core and the second processing core; a second monitor, configured to detect a storage parameter of each of the at least two pieces of task information in the second cache; and a second actuator, configured to adjust a storage parameter of second task information in the second cache based on second control information, where the second control information is output by the control apparatus for the second task information, and the at least two pieces of task information include the second task information. In the foregoing possible implementation, the second cache apparatus corresponding to the at least one processing core may detect, via the monitor, a storage parameter of task information cached by the second cache apparatus, and receive, via the actuator, control information sent by the control apparatus, and control a resource used for task information cached by the second cache apparatus, so that a resource in the shared cache apparatus can be controlled at a granularity of a resource tag, thereby improving scheduling rationality and energy efficiency of the resource in the shared cache apparatus.

In a possible implementation of the first aspect, the first cache apparatus is coupled to the second cache apparatus via an interconnection apparatus; the interconnection apparatus is configured to: transmit the at least two pieces of task information, and determine a transmission parameter of each of the at least two pieces of task information; and the control apparatus is further configured to output third control information of third task information in the at least two pieces of task information, where the third control information is used to adjust a transmission parameter of the third task information in the interconnection apparatus, and the at least two pieces of task information further include the third task information. Optionally, the transmission parameter includes at least one of the following: an access bandwidth and an access delay. In the foregoing possible implementation, the control apparatus may control a resource used for the task information transmitted by the interconnection apparatus, so that a resource on a bus can be controlled at a granularity of a resource tag, thereby improving scheduling rationality and energy efficiency of the resource on the bus.

In a possible implementation of the first aspect, the interconnection apparatus includes: a bus, configured to transmit the at least two pieces of task information; a third monitor, configured to determine a transmission parameter of each of the at least two pieces of task information on the bus; and a third actuator, configured to adjust a transmission parameter of the third task information on the bus based on the third control information. In the foregoing possible implementation, the interconnection apparatus may detect, via the monitor, a transmission parameter of task information transmitted by the interconnection apparatus, and receive, via the actuator, control information sent by the control apparatus, and control a resource used for the task information transmitted by the interconnection apparatus, so that a resource on the bus can be controlled at a granularity of a resource tag, thereby improving scheduling rationality and energy efficiency of the resource on the bus.

In a possible implementation of the first aspect, the first storage apparatus is configured to be coupled to a second storage apparatus (or referred to as a memory apparatus); the second storage apparatus is configured to: store running information, where the running information includes the task information corresponding to the plurality of resource tags; and determine a storage parameter of the task information corresponding to each of the plurality of resource tags; and the control apparatus is further configured to control, based on a storage parameter of task information corresponding to any one of the plurality of resource tags, a resource used for the task information in the second storage apparatus. Optionally, the transmission parameter includes at least one of the following: an access bandwidth and an access delay. In the foregoing possible implementation, the control apparatus can control a resource used for task information stored in the second storage apparatus, so that the resource in the second storage apparatus can be controlled at a granularity of a resource tag, thereby improving scheduling rationality and energy efficiency of the resource in the second storage apparatus.

In a possible implementation of the first aspect, the at least one processing core is further configured to configure a resource tag for each of the plurality of task instances, where the resource tag of each task instance is implemented by configuring at least one of the following: a thread, a control register, an encoding field of an instruction, a redundant bit field of a virtual address, a redundant bit field of a physical address, and a virtual page attribute. In the foregoing possible implementation, a plurality of resource tag configuration manners of different granularities are provided. Configuring the resource tag in the foregoing manner can improve diversity and flexibility of resource tag configuring, thereby improving flexibility and diversity of resource tag-resource control.

In a possible implementation of the first aspect, when a same task instance corresponds to at least two resource tags, the at least two resource tags have different priorities. In the foregoing possible implementation, the priorities are set for the at least two resource tags, so that diversity and flexibility of resource tag configuring can be improved.

According to a second aspect, a task processing method is provided, applied to a task processing apparatus that includes at least one processing core, a first storage apparatus, and a control apparatus. The method includes: The at least one processing core outputs a plurality of resource tags corresponding to a plurality of task instances, where each resource tag identifies at least one task instance that uses a same resource; the first storage apparatus caches a plurality of pieces of task information corresponding to the plurality of resource tags, and determines a storage parameter of each of the plurality of pieces of task information, where task information corresponding to each resource tag includes information about the at least one task instance identified by the resource tag; and the control apparatus outputs control information of any piece of task information in the plurality of pieces of task information, where the control information is used to adjust a storage parameter of the task information in the first storage apparatus, and the storage parameter includes at least one of the following: a miss rate, an access bandwidth, an access delay, a total occupied capacity, and a probability of being replaced.

In a possible implementation of the second aspect, that the at least one processing core outputs the plurality of resource tags corresponding to the plurality of task instances includes: The at least one processing core outputs a plurality of load and store instructions that carry the plurality of resource tags; and that the first storage apparatus caches the plurality of pieces of task information corresponding to the plurality of resource tags includes: The first storage apparatus transmits and caches the plurality of pieces of task information corresponding to the plurality of resource tags according to the plurality of load and store instructions.

In a possible implementation of the second aspect, the at least one processing core includes a first processing core, the first storage apparatus includes a first cache apparatus coupled to the first processing core, and the first cache apparatus includes a first cache, a first monitor, and a first actuator; and that the first storage apparatus caches the plurality of pieces of task information corresponding to the plurality of resource tags, and determines the storage parameter of each of the plurality of pieces of task information includes:

The first cache caches at least one piece of task information, where the at least one piece of task information includes task information corresponding to a resource tag output by the first processing core; and the first monitor detects a storage parameter of each piece of task information in the at least one piece of task information in the first cache; and the method further includes: The first actuator adjusts a storage parameter of first task information in the first cache based on first control information, where the first control information is output by the control apparatus for the first task information, and the at least one piece of task information includes the first task information.

In a possible implementation of the second aspect, the at least one processing core further includes a second processing core, the first storage apparatus further includes a second cache apparatus coupled to both the first processing core and the second processing core, and the second cache apparatus includes a second cache, a second monitor, and a second actuator; that the first storage apparatus caches the plurality of pieces of task information corresponding to the plurality of resource tags, and determines the storage parameter of each of the plurality of pieces of task information further includes: The second cache caches at least two pieces of task information, where the at least two pieces of task information include task information corresponding to resource tags output by the first processing core and the second processing core; and the second monitor detects a storage parameter of each of the at least two pieces of task information in the second cache; and the method further includes: The second actuator adjusts a storage parameter of second task information in the second cache based on second control information, where the second control information is output by the control apparatus for the second task information, and the at least two pieces of task information include the second task information.

In a possible implementation of the second aspect, the first cache apparatus is coupled to the second cache apparatus via an interconnection apparatus; and the method further includes: The interconnection apparatus transmits the at least two pieces of task information, and determines a transmission parameter of each of the at least two pieces of task information; and the control apparatus outputs third control information of third task information in the at least two pieces of task information, where the third control information is used to adjust a transmission parameter of the third task information in the interconnection apparatus, the at least two pieces of task information further include the third task information, and the transmission parameter includes at least one of the following: an access bandwidth and an access delay.

In a possible implementation of the second aspect, the interconnection apparatus includes a bus, a third monitor, and a third actuator: that the interconnection apparatus transmits the at least two pieces of task information, and determines the transmission parameter of each of the at least two pieces of task information includes: The bus transmits the at least two pieces of task information; and the third monitor determines a transmission parameter of each of the at least two pieces of task information on the bus; and the method further includes: The third actuator controls, based on the third control information, a resource used for the third task information on the bus. In a possible implementation of the second aspect, the first storage apparatus is configured to be coupled to a second storage apparatus; and the method further includes: The second storage apparatus stores running information, where the running information includes the task information corresponding to the plurality of resource tags; the second storage apparatus determines a storage parameter of the task information corresponding to each of the plurality of resource tags; and the control apparatus adjusts a storage parameter, in the second storage apparatus, of task information corresponding to any one of the plurality of resource tags.

In a possible implementation of the second aspect, the method further includes: The at least one processing core configures a resource tag for each of the plurality of task instances, where the resource tag of each task instance is implemented by configuring at least one of the following: a thread, a control register, an encoding field of an instruction, a redundant bit field of a virtual address, a redundant bit field of a physical address, and a virtual page attribute.

In a possible implementation of the second aspect, when a same task instance corresponds to at least two resource tags, the at least two resource tags have different priorities.

According to a third aspect, an electronic device is provided. The electronic device includes a memory and a task processing apparatus, the memory is configured to store computer instructions, and the task processing apparatus is configured to execute the computer instructions, to enable the electronic device to implement the task processing method according to any one of the second aspect or the possible implementations of the second aspect.

According to still another aspect of this application, a computer-readable storage medium is provided. The computer-readable storage medium stores a computer program or instructions. When the computer program or the instructions are run, the task processing method according to any one of the second aspect or the possible implementations of the second aspect is implemented.

According to still another aspect of this application, a computer program product is provided. The computer program product includes a computer program (which may also be referred to as code or instructions). When the computer program is run, a computer is enabled to perform the task processing method according to any one of the second aspect or the possible implementations of the second aspect.

It may be understood that, for beneficial effect that can be achieved by any one of the task processing method, the electronic device, the computer-readable storage medium, and the computer program product provided above, correspondingly refer to the beneficial effect of the task processing apparatus provided above. Details are not described herein again.

### BRIEF DESCRIPTION OF DRAWINGS

FIG. 1 is a diagram of a structure of a processor system according to an embodiment of this application;
FIG. 2 is a diagram of a structure of a task processing apparatus according to an embodiment of this application;
FIG. 3 is a diagram of a structure of another task processing apparatus according to an embodiment of this application;
FIG. 4 is a diagram in which a control apparatus controls a first storage apparatus according to an embodiment of this application;
FIG. 5 is a flowchart of configuring a resource tag according to an embodiment of this application;
FIG. 6 is another flowchart of configuring a resource tag according to an embodiment of this application;
FIG. 7 is a diagram of controlling a resource used for task information corresponding to a resource tag according to an embodiment of this application; and
FIG. 8 is a diagram of a structure of an electronic device according to an embodiment of this application.

### DESCRIPTION OF EMBODIMENTS

The making and use of embodiments are discussed in detail below. However, it should be appreciated that many applicable inventive concepts provided in this application may be implemented in a plurality of specific environments. The specific embodiments discussed are merely used to describe specific manners to implement and use this application and this technology, and do not limit the scope of this application.

Unless otherwise defined, all technical terms used in this specification have the same meanings as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" refers to one or more, and "a plurality of" refers to two or more. "And/Or" describes an association relationship between associated objects, and represents that three relationships may exist. For example, A and/or B may represent the following cases: Only A exists, both A and B exist, and only B exists, where A and B may be singular or plural. A character "/" generally represents an "or" relationship between associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The word "coupling" is used for representing an electrical connection, including a direct connection through a wire or a connection end or an indirect connection through another device. Therefore, "coupling" should be considered as a generalized electronic communication connection.

It should be noted that, in this application, the word like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

In a running process, a processor system usually executes a plurality of different tasks at the same time. Different tasks or different phases of a same task have different performance requirements, for example, a requirement for quality of service (quality of service, QoS), a requirement for processor resources, and a requirement for energy efficiency. In view of this, embodiments of this application provide a task processing apparatus and a task processing method, to provide fine-granularity resource management and control for different task scenarios or different phases of a same task, to ensure QoS of the task, improve resource scheduling rationality and system energy efficiency, and further improve task processing performance.

The technical solutions provided in embodiments of this application may be applied to a processor system, and the processor system may also be referred to as a processor subsystem or a processing system. The processor system may include at least one processing core (or referred to as a kernel, also referred to as a processor core). A private cache (for example, a level-1 cache and a level-2 cache) is correspondingly disposed for each processing core. Private caches of different processing cores may be coupled to a shared cache (for example, a level-3 cache) through a bus. Different processing cores in the at least one processing core can access the shared cache.

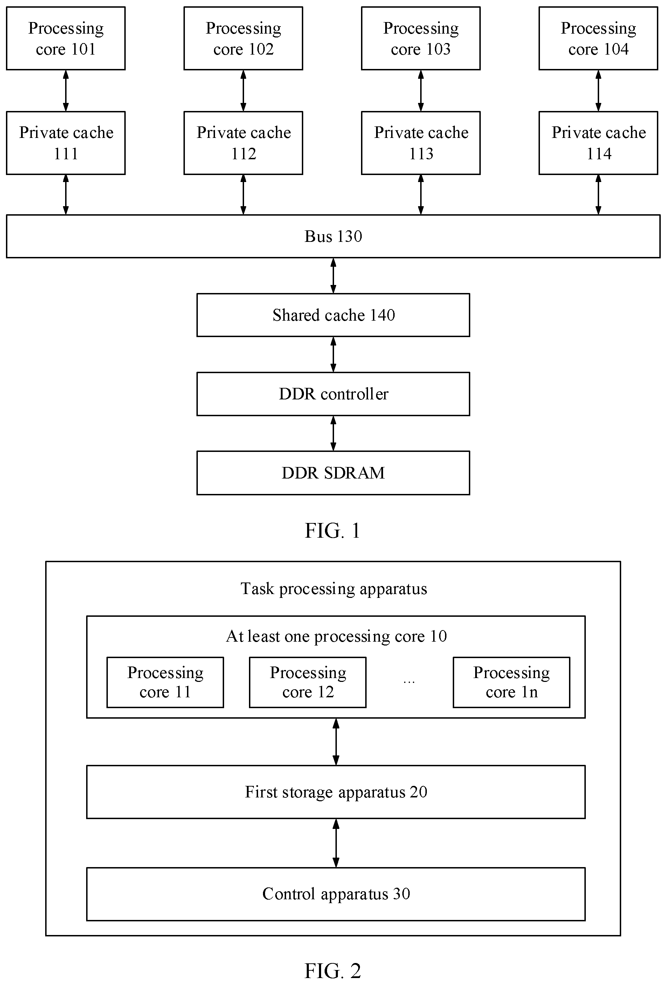

For example, as shown in FIG. 1, the processor system includes a plurality of processing cores, where the plurality of processing cores include a processing core 101 to a processing core 104, the processing core 101 is coupled to a private cache 111, the processing core 102 is coupled to a private cache 112, the processing core 103 is coupled to a private cache 113, the processing core 104 is coupled to a private cache 114, and the private cache 111, the private cache 112, the private cache 113, and the private cache 114 are coupled to a shared cache 140 through a bus 130.

In the processor system, the plurality of processing cores may include a plurality of different processing cores of a same processor, or the plurality of processing cores include processing cores of a plurality of different processors, that is, the plurality of processing cores may form one or more processors. The processor includes but is not limited to a CPU, a general-purpose processor, a graphics processing unit (graphics processing unit, GPU), an image signal processor (image signal processor, ISP), a digital signal processor (digital signal processor, DSP), a network processing unit (network processing unit, NPU), an artificial intelligence (artificial intelligence, AI) processor, and the like. Optionally, structures of any two of the plurality of processing cores and sizes of hardware resources (for example, cache resources) of the processing cores may be the same or different. This is not specifically limited in embodiments of this application.

Further, as shown in FIG. 1, the processor system further includes a controller and a memory. The controller and the memory may form a storage system. Optionally, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example, the RAM may be a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), or the like. In FIG. 1, an example in which the processor system includes a DDR controller and a DDR SDRAM is used for description.

The processor system may be an electronic device, or a system on chip (system on chip, SoC) used in an electronic device, or a chip set including a plurality of chips, or a module including the SoC or the chip set. The electronic device may be used as a terminal device, or may be used as a server. Optionally, the electronic device includes but is not limited to a mobile phone, a tablet computer, a notebook computer, a desktop computer, a palmtop computer, an ultra-mobile personal computer (ultra-mobile personal computer, umPC), a mobile internet device (mobile internet device, MID), a netbook, a video camera, a camera, a wearable device (for example, a smart watch or a smart band), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, and an electric meter), a smart robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a flight device (for example, a smart robot, a hot air balloon, an unmanned aerial vehicle, or an airplane), or the like.

FIG. 2 is a diagram of a structure of a task processing apparatus according to an embodiment of this application. The task processing apparatus may be applied to the processor system provided above. The task processing apparatus includes at least one processing core 10, a first storage apparatus 20, and a control apparatus 30, where the at least one processing core 10 is coupled to the first storage apparatus 20, and the first storage apparatus 20 is coupled to the control apparatus 30. In FIG. 2, an example in which the at least one processing core 10 includes n processing cores that are represented as a processing core 11, a processing core 12, ..., and a processing core 1n is used for description.

The at least one processing core 10 is configured to output a plurality of resource tags corresponding to a plurality of task instances, where each resource tag identifies at least one task instance that uses a same resource (or each resource tag corresponds to at least one task instance), and the plurality of task instances include a subtask of one or more tasks. The at least one processing core includes one or more processing cores. The one or more processing cores are configured to run one or more tasks. Each task may include a plurality of subtasks (or referred to as a plurality of phases), and each subtask may be referred to as a task instance (or referred to as a software instance). For example, the task instance may include but is not limited to a process, a thread, an executed function, an accessed memory address, communication between threads, and the like. In addition, each of the plurality of task instances may correspond to one resource tag, and resource tags corresponding to different task instances in the plurality of task instances may be the same or different.

Optionally, the at least one task instance corresponding to each resource tag may include at least one task instance in a same scenario, and different resource tags may correspond to task instances in different task scenarios or different phases. Each of the plurality of resource tags may identify one resource group, and at least one task instance corresponding to a same resource tag shares a same resource group. In other words, the at least one processing core 10 may divide the plurality of task instances into a plurality of groups based on different task scenarios or different phases of a same task. Each group corresponds to one resource tag, and a plurality of task instances in a same group use a same resource group during running.

In a possible embodiment, for each of the plurality of resource tags, when the at least one processing core 10 is configured to output the resource tag, the resource tag may be carried in an instruction that is output to the first storage apparatus 20. The instruction may be an instruction for a task instance corresponding to the resource tag, that is, an instruction for the task instance output by the at least one processing core 10 in a process of running the task instance. For example, the at least one processing core 10 may be specifically configured to output a plurality of load and store instructions that carry the plurality of resource tags, where each load and store instruction may include a load instruction and/or a store instruction.

The first storage apparatus 20 is configured to: cache a plurality of pieces of task information corresponding to the plurality of resource tags, and determine a storage parameter of each of the plurality of pieces of task information. Each resource tag corresponds to one piece of task information, and the task information includes information about at least one task instance corresponding to the resource tag. For example, the task information includes data and/or an instruction involved in the at least one task instance in a running process. The storage parameter of each piece of task information includes a parameter of a resource used for (or referred to as occupied by) the task information in the first storage apparatus 20. For example, the storage parameter includes a bandwidth, a delay, and a storage capacity.

In a possible embodiment, the at least one processing core 10 is configured to output a plurality of load and store instructions that carry the plurality of resource tags. For each resource tag in the plurality of resource tags, the first storage apparatus 20 may be configured to: when receiving the load and store instruction that carries the resource tag, load, according to the load and store instruction, task information corresponding to the resource tag, or store task information corresponding to the resource tag.

The control apparatus 30 is configured to output control information of any piece of task information in the plurality of pieces of task information, where the control information is used to adjust a storage parameter of the task information in the first storage apparatus 20. In other words, the control apparatus may be configured to control, based on a storage parameter of any piece of task information in the plurality of pieces of task information, a resource used for the task information in the first storage apparatus 20. Optionally, the control apparatus 30 may be a device or unit that has a control function or is configurable. For example, the control apparatus 30 may be an embedded controller, a microcontroller unit (microcontroller unit, MCU), a field programmable gate array (field programmable gate array, FPGA), or a complex programmable logic device (complex programmable logic device, CPLD).

In the task processing apparatus provided in this embodiment of this application, the at least one processing core 10 is configured to output the plurality of resource tags corresponding to the plurality of task instances, the first storage apparatus 20 is configured to: cache the plurality of pieces of task information corresponding to the plurality of resource tags and determine the storage parameter of each piece of task information, and the control apparatus 30 is configured to adjust the storage parameter of any piece of task information in the first storage apparatus 20, so that the control apparatus 30 can control, at a granularity of a resource tag, a resource used for the task information corresponding to each resource tag. In this way, when different resource tags correspond to task instances in different task scenarios or different phases of a same task, fine-granularity resource management and control can be provided for the different task scenarios or the different phases of the same task, to ensure QoS of the task, improve resource scheduling rationality and system energy efficiency, and further improve task processing performance.

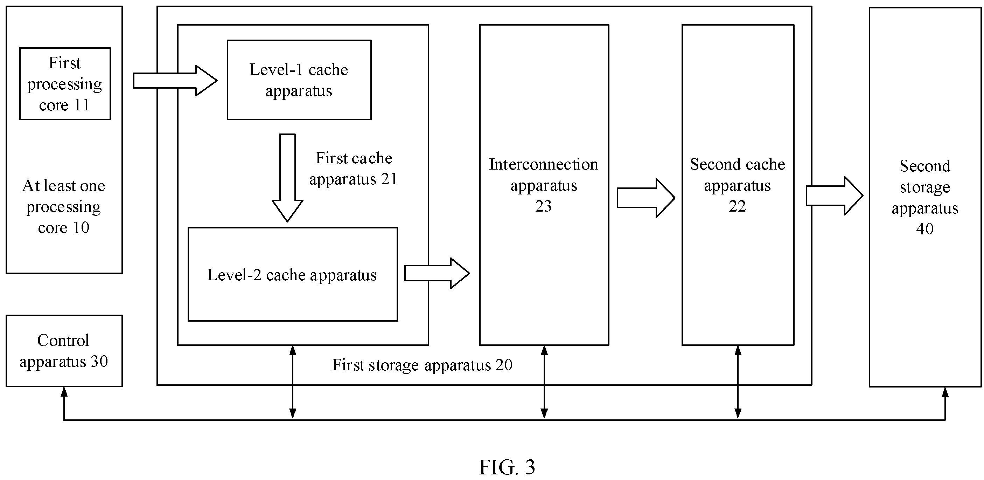

Further, as shown in FIG. 3, the first storage apparatus 20 may include a first cache apparatus 21 that is correspondingly coupled to each processing core, and may further include a second cache apparatus 22 that is coupled to the at least one processing core 10. The first cache apparatus 21 may be coupled to the second cache apparatus 22 via an interconnection apparatus 23. Optionally, the first cache apparatus 21 may also be referred to as a private cache apparatus. For example, the first cache apparatus 21 may include a level-1 cache apparatus, or include a level-2 cache apparatus, or include both a level-1 cache apparatus and a level-2 cache apparatus. The second cache apparatus 22 may also be referred to as a shared cache apparatus. For example, the second cache apparatus 22 may include a level-3 cache apparatus. In FIG. 3, an example in which the at least one processing core 10 includes a first processing core 11, and the first cache apparatus 21 includes a level-1 cache apparatus and a level-2 cache apparatus is used for description.

Optionally, the first cache apparatus 21 and/or the second cache apparatus 22 may be configured to determine the storage parameter of each of the plurality of pieces of task information. For example, in the first cache apparatus 21 or the second cache apparatus, the storage parameter of each piece of task information may include but is not limited to a miss rate, an access bandwidth, an access delay, a total occupied capacity, a probability of being replaced, and the like. Correspondingly, the control apparatus 30 may be specifically configured to: control, based on the storage parameter of any piece of task information in the first cache apparatus 21, a resource used for the task information in the first cache apparatus 21, and/or control, based on the storage parameter of any piece of task information in the second cache apparatus 22, a resource used for the task information in the second cache apparatus 22. For example, one or more of bandwidth allocation, capacity allocation, a replacement algorithm, and/or a priority of the task information in the first cache apparatus 21 and/or the second cache apparatus 22 are controlled.

Optionally, the interconnection apparatus 23 may be configured to: transmit and determine a transmission parameter of each of the plurality of pieces of task information. For example, the transmission parameter of each piece of task information may include but is not limited to: an access bandwidth and an access delay. For example, the interconnection apparatus 23 may be configured to: transmit a part or all of the plurality of pieces of task information from the first cache apparatus 21 to the second cache apparatus 22 (or referred to as write back to the second cache apparatus 22), or transmit a part or all of the plurality of pieces of task information from the second cache apparatus 22 to the first cache apparatus 21 (or referred to as backfill to the first cache apparatus 21). The control apparatus 30 is further configured to adjust a transmission parameter of any piece of task information in the interconnection apparatus 23, that is, control a resource used for the task information in the interconnection apparatus 23, for example, control one or more of bandwidth allocation and/or a priority of the task information in the interconnection apparatus 23.

Optionally, when the first storage apparatus 20 includes the first cache apparatus 21, the second cache apparatus 22, and/or the interconnection apparatus 23, the plurality of resource tags output by the at least one processing core 10 may also be transmitted between the first cache apparatus 21, the interconnection apparatus 23, and the second cache apparatus 22. For example, the plurality of resource tags may be transmitted between the first cache apparatus 21, the interconnection apparatus 23, and the second cache apparatus 22 along with writeback or backfill of the plurality of pieces of task information.

For ease of understanding, the following describes, separately by using different embodiments, a process in which the control apparatus 30 controls the first cache apparatus 21, the second cache apparatus 22, and the interconnection apparatus 23.

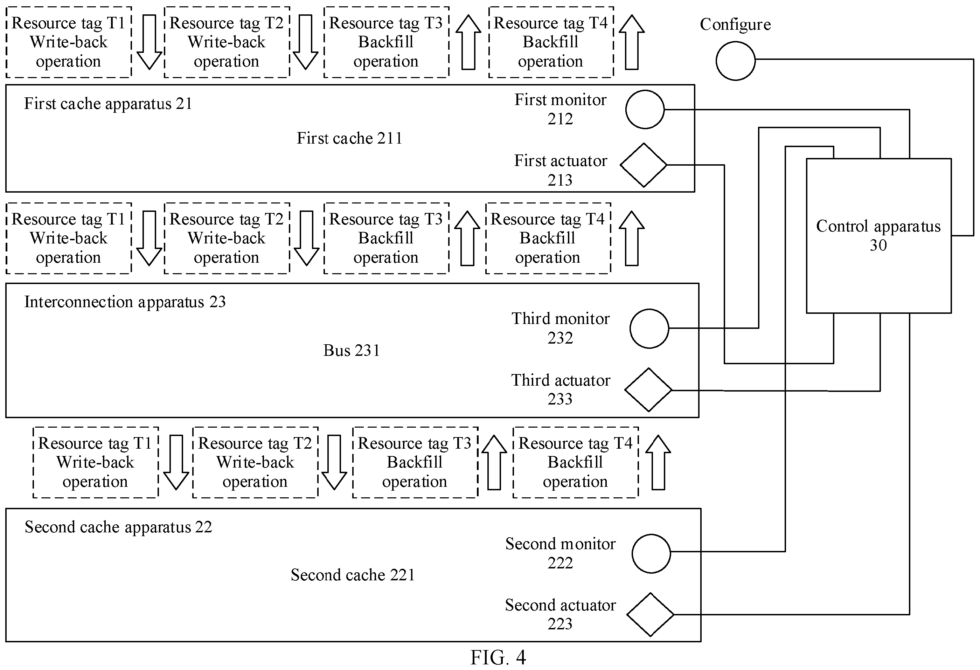

In a possible embodiment, as shown in FIG. 4, the first storage apparatus 20 includes the first cache apparatus 21 coupled to the first processing core 11. The first cache apparatus 21 includes a first cache 211, a first monitor 212, and a first actuator 213, and both the first monitor 212 and the first actuator 213 are coupled to the first cache 211.

The first cache 211 is configured to cache at least one piece of task information, where the at least one piece of task information includes task information corresponding to a resource tag output by the first processing core 11. The first monitor 212 is configured to detect a storage parameter of each piece of task information in the at least one piece of task information in the first cache 211. The first actuator 213 is configured to adjust a storage parameter of first task information in the first cache 211 based on first control information, that is, control a resource used for the first task information in the first cache 211, where the first control information is output by the control apparatus 30 for the first task information, and the at least one piece of task information includes the first task information.

When the first processing core 11 is configured to run a task and the task includes one or more task instances, the first processing core 11 may be configured to output at least one resource tag for the one or more task instances. The at least one resource tag may include a part or all of the plurality of resource tags, that is, the resource tag output by the first processing core 11 may be a part or all of the plurality of resource tags output by the at least one processing core 10. The first cache 211 is specifically configured to cache at least one piece of task information corresponding to the at least one resource tag.

For example, for any piece of task information (for example, the first task information) in the at least one piece of task information, the first monitor 212 may be configured to: detect the storage parameter of the first task information cached in the first cache 211, and output the storage parameter to the control apparatus 30. The control apparatus 30 may be configured to output the first control information to the first actuator 213 based on the storage parameter of the first task information. The first actuator 213 may be configured to control, based on the first control information, the resource used for the first task information in the first cache 211.

In another possible embodiment, as shown in FIG. 4, the first storage apparatus 20 further includes the second cache apparatus 22 coupled to both the first processing core 11 and a second processing core 12. The second cache apparatus 22 includes a second cache 221, a second monitor 222, and a second actuator 223, where both the second monitor 222 and the second actuator 223 are coupled to the second cache 221.

The second cache 221 is configured to cache at least two pieces of task information, where the at least two pieces of task information include task information corresponding to resource tags output by the first processing core 11 and the second processing core 12. The second monitor 222 is configured to detect a storage parameter of each of the at least two pieces of task information in the second cache 221. The second actuator 223 is configured to control, based on second control information, a resource used for second task information in the second cache 221, where the second control information is output by the control apparatus 30 based on a storage parameter of the second task information, and the at least two pieces of task information include the second task information.

When the first processing core 11 and the second processing core 12 each are configured to run a task, the first processing core 11 may be configured to output at least one resource tag for one or more task instances, and the second processing core 12 may also be configured to output at least one resource tag for one or more task instances. For example, the first processing core 11 and the second processing core 12 may output at least two resource tags. The at least two resource tags may include a part or all of the plurality of resource tags, that is, the resource tags output by the first processing core 11 and the second processing core 12 may be a part or all of the plurality of resource tags output by the at least one processing core 10. The second cache 221 is specifically configured to cache at least two pieces of task information corresponding to the at least two resource tags.

For example, for any piece of task information (for example, the second task information) in the at least two pieces of task information, the second monitor 222 may be configured to: detect the storage parameter of the second task information cached in the second cache 221, and output the storage parameter to the control apparatus 30. The control apparatus 30 may be configured to output the second control information to the second actuator 223 based on the storage parameter of the second task information. The second actuator 223 may be configured to control, based on the second control information, the resource used for the second task information in the second cache 221.

In still another possible embodiment, as shown in FIG. 4, the first cache apparatus 21 is coupled to the second cache apparatus 22 via the interconnection apparatus 23. The interconnection apparatus 23 includes a bus 231, a third monitor 232, and a third actuator 233, where both the third monitor 232 and the third actuator 233 are coupled to the bus 231.

The bus 231 is configured to transmit the plurality of pieces of task information corresponding to the plurality of resource tags, for example, transmit the at least two pieces of task information corresponding to the at least two resource tags output by the first processing core 11 and the second processing core 12. The third monitor 232 is configured to determine a transmission parameter of each of the plurality of pieces of task information on the bus 231. The third actuator 233 is configured to control, based on third control information, a resource occupied by third task information on the bus 231, where the third control information is output by the control apparatus 30 based on a transmission parameter of the third task information, and the plurality of pieces of task information include the third task information.

In a process in which any processing core in the at least one processing core 10 runs a task, the processing core may obtain task information from the first cache apparatus 21, and the first cache apparatus 21 may obtain the task information from the second cache apparatus 22 via the interconnection apparatus 23. In addition, the first processing core 11 may also store the task information in the first cache apparatus 21, and the first cache apparatus 21 may also store the task information in the second cache apparatus 22 via the interconnection apparatus 23. The obtaining the task information may also be referred to as backfilling the task information, and the storing the task information may also be referred to as writing back the task information. In FIG. 4, an example in which the written-back and backfilled task information includes task information corresponding to resource tags T1, T2, T3, and T4 is used for description, and the first processing core 11 and the second processing core 12 are not shown.

In other words, the task information may be transmitted between the first cache apparatus 21 and the second cache apparatus 22 via the interconnection apparatus 23. For example, task information of the first processing core 11 may be transmitted between the first cache apparatus 21 coupled to the first processing core 11 and the second cache apparatus 22 via the interconnection apparatus 23, and task information of the second processing core 12 may be transmitted between the first cache apparatus 21 coupled to the second processing core 12 and the second cache apparatus 22 via the interconnection apparatus 23.

For example, when a plurality of pieces of task information are transmitted between the first cache apparatus 21 coupled to each processing core in the at least one processing core 10 and the second cache apparatus 22 through the bus 231 in the interconnection apparatus 23, the third monitor 232 may be configured to: detect a transmission parameter of each of the plurality of pieces of task information, and output the transmission parameter to the control apparatus 30. The control apparatus 30 may be configured to output the third control information to the third actuator 233 based on the transmission parameter of the third task information, where the third task information is any one of the plurality of pieces of task information. The third actuator 233 may be configured to control, based on the third control information, the resource used for the third task information on the bus 231.

In this embodiment of this application, when the first storage apparatus 20 includes the first cache apparatus 21, the second cache apparatus 22, and/or the interconnection apparatus 23, the monitors in the foregoing apparatuses each may detect and output a storage parameter or a transmission parameter of any piece of task information. The control apparatus 30 may control, based on the storage parameter or the transmission parameter of the task information, a resource used for the task information in the foregoing apparatuses, so that for any one of the first cache apparatus 21, the second cache apparatus 22, or the interconnection apparatus 23, the control apparatus 30 can implement fine-granularity resource management and control for different task scenarios or different phases of a same task, to ensure QoS of the task, improve resource scheduling rationality and system energy efficiency, and further improve task processing performance.

Further, as shown in FIG. 3, the first storage apparatus 20 is configured to be coupled to a second storage apparatus 40. The second storage apparatus 40 is configured to: store running information, where the running information includes the task information corresponding to the plurality of resource tags; and determine a storage parameter of the task information corresponding to each of the plurality of resource tags. The control apparatus is further configured to control, based on a storage parameter of task information corresponding to any one of the plurality of resource tags, a resource used for the task information in the second storage apparatus 40.

Optionally, the second storage apparatus 40 may be integrated into the task processing apparatus, or may not be integrated into the task processing apparatus, or may be partially integrated into the task processing apparatus. This is not specifically limited in embodiments of this application. For example, the second storage apparatus 40 may be a memory apparatus, and the memory apparatus may include a controller and a memory. The controller may be integrated into the task processing apparatus, and the memory may not be integrated into the task processing apparatus.

Similarly, the second storage apparatus 40 may alternatively include a monitor and an actuator. The monitor may be configured to detect the storage parameter of the task information corresponding to each resource tag stored in the second storage apparatus 40. The storage parameter may include a bandwidth and/or a delay. The control apparatus may be configured to output control information based on a storage parameter of any piece of task information. The actuator may be configured to control, based on the control information, a resource used for the task information in the second storage apparatus 40.

It may be understood that the foregoing specific descriptions of the second storage apparatus 40 is similar to the foregoing descriptions of the first storage apparatus 20. For details, refer to the foregoing descriptions. Details are not described herein again in embodiments of this application.

Further, the plurality of resource tags that correspond to the plurality of task instances and that are output by the at least one processing core 10 may be configured by the at least one processing core 10, and may be specifically configured during or before running each task instance. This is not specifically limited in embodiments of this application.

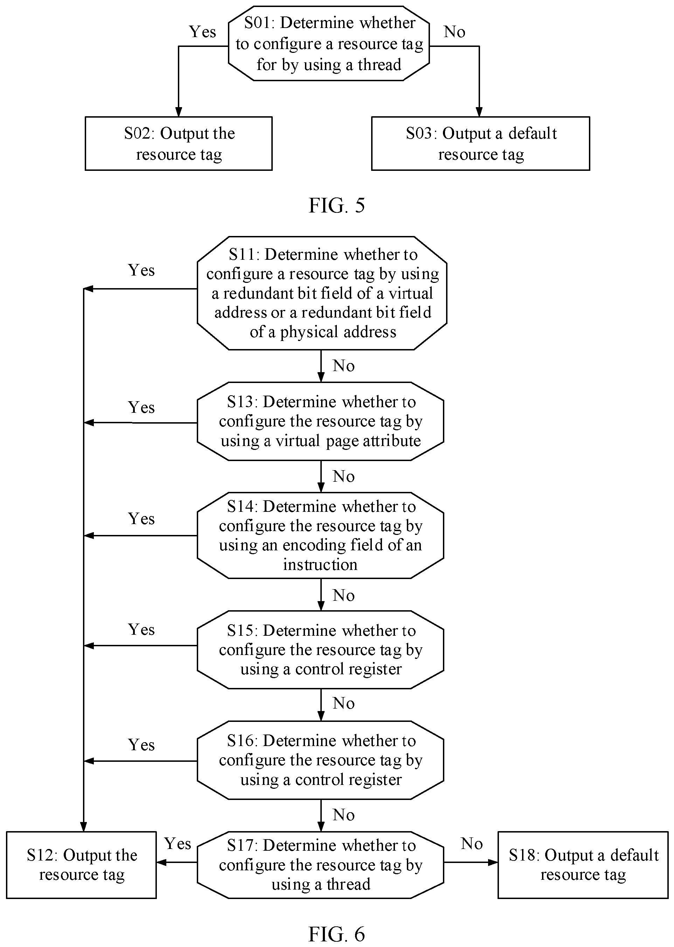

In a possible embodiment, the at least one processing core 10 is further configured to configure a resource tag for each of the plurality of task instances, where the resource tag of each task instance is implemented by configuring at least one of the following: a thread, a control register, an encoding field of an instruction, a redundant bit field of a virtual address, a redundant bit field of a physical address, and a virtual page attribute. For example, as shown in FIG. 5, any processing core in the at least one processing core 10 may configure a resource tag for a task instance by using a thread. A specific configuration procedure may include: S01: Determine whether to configure the resource tag for by using a thread, where if yes, S02 is performed, or if no, S03 is output; S02: Output the resource tag; and S03: Output a default resource tag. The default resource tag may be preconfigured. For example, the default resource tag may be an invalid resource tag, and the control apparatus 30 may not control a resource used for the default resource tag.

Optionally, the at least one processing core 10 may be further configured to configure at least two resource tags for one task instance. When a same task instance corresponds to at least two resource tags, the at least two resource tags have different priorities. To be specific, the at least one processing core 10 may be configured to configure at least two resource tags with different priorities for one task instance, and the first storage apparatus 20 and the control apparatus 30 may preferentially process task information of the task instance based on a resource tag with a higher priority.

Optionally, that a priority of a resource tag is determined in a manner of configuring the resource tag is used as an example. Priorities corresponding to the foregoing several configuration manners may be sequentially arranged in descending order: a redundant bit field of a virtual address or a redundant bit field of a physical address, a virtual page attribute, an encoding field of an instruction, a control register, and a thread. For example, as shown in FIG. 6, a specific procedure in which any processing core in the at least one processing core 10 configures a resource tag for a task instance may include: S11: Determine whether to configure the resource tag by using a redundant bit field of a virtual address or a redundant bit field of a physical address, where if yes, S12 is performed, or if no, S13 is output; S12: Output the resource tag; S13: Determine whether to configure the resource tag by using a virtual page attribute, where if yes, S12 is performed, or if no, S14 is performed; S14: Determine whether to configure the resource tag by using an encoding field of an instruction, where if yes, S12 is performed, or if no, S15 is performed; S15: Determine whether to configure the resource tag by using a control register, where if yes, S12 is performed, or if no, S16 is performed; S16: Determine whether to configure the resource tag by using a control register, where if yes, S12 is performed, or if no, S17 is performed; S17: Determine whether to configure the resource tag by using a thread, where if yes, S12 is performed, or if no, S18 is performed; and S18: Output a default resource tag. The default resource tag may be preconfigured. For example, the default resource tag may be an invalid resource tag, and the control apparatus 30 may not control a resource used for the default resource tag.

It may be understood that the foregoing sequence of the priorities corresponding to the several configuration manners is merely an example. During actual application, the sequence may be another different priority sequence, or only a part of configuration manners and priorities are included. This is not specifically limited in embodiments of this application.

Further, for any piece of task information in the plurality of pieces of task information, when controlling a resource used for the task information, in addition to a storage parameter or a transmission parameter of the task information, the control apparatus 30 may further perform control based on a control strategy and/or a resource configuration parameter corresponding to the task information. The control strategy may also be referred to as a control algorithm, and the resource configuration parameter may also be referred to as a resource budget. Optionally, the control apparatus 30 may be specifically configured to control, based on the storage parameter of the task information in the first storage apparatus 20 and the resource configuration parameter corresponding to the task information, a resource used for the task information in the first storage apparatus 20.

Control strategies and/or resource configuration parameters corresponding to all the pieces of task information (or referred to as control strategies and/or resource configuration parameters corresponding to different resource tags) may be preconfigured. Control strategies and/or resource configuration parameters corresponding to different task information may be the same or different, and may be specifically configured based on actual requirements. This is not specifically limited in embodiments of this application.

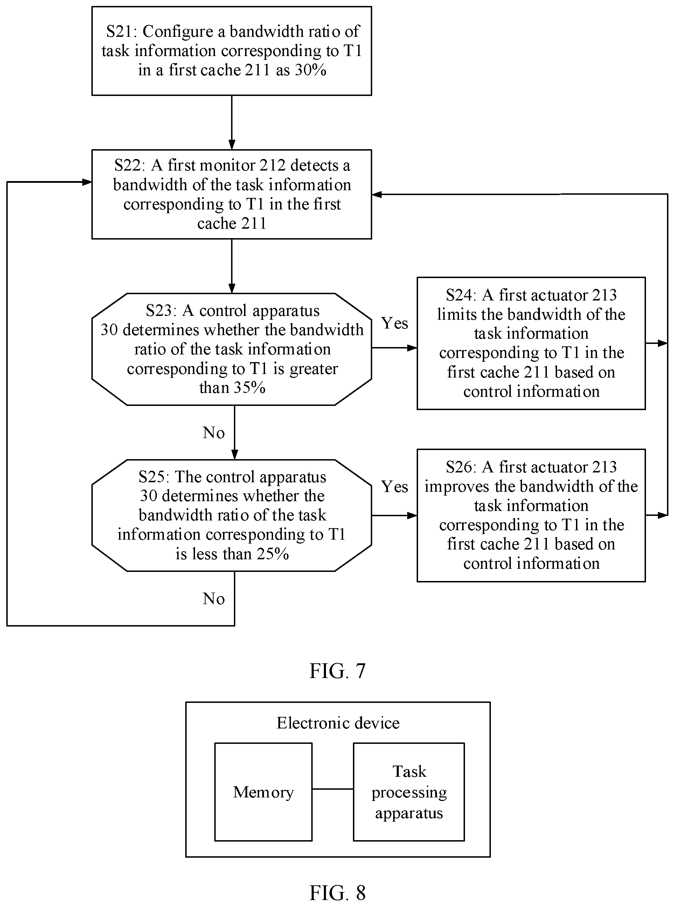

For example, as shown in FIG. 7, the first cache apparatus 21 in the first storage apparatus 20, the task information being the task information corresponding to the resource tag T1, and the storage parameter of the task information including bandwidth are used as an example. A specific procedure of controlling a resource used for the task information in the first cache apparatus 21 may include: S21: Configure a bandwidth ratio of the task information corresponding to T1 in the first cache 211 as 30%; S22: The first monitor 212 detects a bandwidth for the task information corresponding to T1 in the first cache 211, and outputs the bandwidth to the control apparatus 30; S23: The control apparatus 30 determines whether the bandwidth ratio of the task information corresponding to T1 is greater than 35%, where if yes, S24 is performed, or if no, S25 is performed; S24: The control apparatus 30 outputs control information, the first actuator 213 limits (or reduces) the bandwidth for the task information corresponding to T1 in the first cache 211 based on the control information, and S22 is performed; S25: The control apparatus 30 determines whether the bandwidth ratio of the task information corresponding to T1 is less than 25%, where if yes, S26 is performed, or if no, S22 is performed; and S26: The control apparatus 30 outputs control information, the first actuator 213 improves (or increases) the bandwidth for the task information corresponding to T1 in the first cache 211 based on the control information, and S22 is performed.

In this embodiment of this application, the control apparatus 30 may reduce or increase, based on the storage parameter that is of the task information corresponding to any resource tag and that is detected by the monitor in the first storage apparatus 20, the resource used for the task information in the first storage apparatus 20, so that the storage parameter of the task information is maintained within a specific range, to implement closed-loop control on the resource used for the task information. In other words, the control apparatus 30 may implement, at a granularity of a resource tag, closed-loop control on a resource used for task information corresponding to each resource tag. In this way, when different resource tags correspond to task instances in different task scenarios or different phases of a same task, fine-granularity resource management and control can be provided for the different task scenarios or the different phases of the same task, to ensure QoS of the task, improve resource scheduling rationality and system energy efficiency, and further improve task processing performance.

In view of this, an embodiment of this application further provides a task processing method. The method may be applied to the task processing apparatus provided above. For descriptions of the task processing apparatus, refer to the foregoing descriptions. The method includes: At least one processing core outputs a plurality of resource tags corresponding to a plurality of task instances, where each resource tag corresponds to at least one task instance, and the plurality of task instances include a subtask of one or more tasks; a first storage apparatus caches a plurality of pieces of task information corresponding to the plurality of resource tags, and determines a storage parameter of each of the plurality of pieces of task information; and a control apparatus outputs control information based on a storage parameter of any piece of task information in the plurality of pieces of task information, where the control information is used to control a resource used for the task information in the first storage apparatus.

Optionally, that the at least one processing core outputs the plurality of resource tags corresponding to the plurality of task instances includes: The at least one processing core outputs a plurality of load and store instructions that carry the plurality of resource tags; and that the first storage apparatus caches the plurality of pieces of task information corresponding to the plurality of resource tags includes: The first storage apparatus transmits and caches the plurality of pieces of task information corresponding to the plurality of resource tags according to the plurality of load and store instructions.

In a possible embodiment, that the first storage apparatus caches the plurality of pieces of task information corresponding to the plurality of resource tags, and determines the storage parameter of each of the plurality of pieces of task information includes: A first cache caches at least one piece of task information, where the at least one piece of task information includes task information corresponding to a resource tag output by a first processing core; and a first monitor detects a storage parameter of each piece of task information in the at least one piece of task information in the first cache. Further, the method further includes: A first actuator controls, based on first control information, a resource used for first task information in the first cache, where the first control information is output by the control apparatus based on a storage parameter of the first task information, and the at least one piece of task information includes the first task information.

In another possible embodiment, that the first storage apparatus caches the plurality of pieces of task information corresponding to the plurality of resource tags, and determines the storage parameter of each of the plurality of pieces of task information further includes: A second cache caches at least two pieces of task information, where the at least two pieces of task information include task information corresponding to resource tags output by the first processing core and a second processing core; and a second monitor detects a storage parameter of each of the at least two pieces of task information in the second cache. Further, the method further includes: A second actuator controls, based on second control information, a resource used for second task information in the second cache, where the second control information is output by the control apparatus based on a storage parameter of the second task information, and the at least two pieces of task information include the second task information.

In still another possible embodiment, the method further includes: An interconnection apparatus transmits the at least two pieces of task information, and determines a transmission parameter of each of the at least two pieces of task information; and the control apparatus outputs third control information based on a transmission parameter of third task information in the at least two pieces of task information, where the third control information is used to control a resource used for the third task information in the interconnection apparatus, and the at least two pieces of task information further include the third task information.

Optionally, that the interconnection apparatus transmits the at least two pieces of task information, and determines the transmission parameter of each of the at least two pieces of task information includes: A bus transmits the at least two pieces of task information; and a third monitor determines a transmission parameter of each of the at least two pieces of task information on the bus. Further, the method further includes: A third actuator controls, based on the third control information, a resource used for the third task information on the bus.

In yet another possible embodiment, the method further includes: A second storage apparatus stores running information, where the running information includes the task information corresponding to the plurality of resource tags; the second storage apparatus determines a storage parameter of the task information corresponding to each of the plurality of resource tags; and the control apparatus controls, based on a storage parameter of task information corresponding to any one of the plurality of resource tags, a resource used for the task information in the second storage apparatus.

Further, the method further includes: The at least one processing core configures a resource tag for each of the plurality of task instances, where the resource tag of each task instance is implemented by configuring at least one of the following: a thread, a control register, an encoding field of an instruction, a redundant bit field of a virtual address, a redundant bit field of a physical address, and a virtual page attribute. Optionally, when a same task instance corresponds to at least two resource tags, the at least two resource tags have different priorities.

For example, when the resource tag is configured by using the thread, the configuration may be specifically implemented by configuring a thread context control register by a load storage unit (load storage unit, LSU) in a processing core. The resource tag is assigned a value in the thread context control register, and the thread is mapped to a corresponding resource tag. The thread context control register is switched when an operating system switches thread context.

For example, when the resource tag is configured by using the control register, the configuration may be specifically implemented by configuring the control register by the LSU in the processing core. In an execution process, a same thread may dynamically configure the control register to perform resource group switching, to implement different resource management strategies at different phases of program running.

For example, when the resource tag is configured by using the encoding field of the instruction, specifically, an encoder in a processing core may encode the resource tag to an immediate field of a load and store instruction, and a decoder in the processing core may extract the resource tag in the immediate field and transfer the resource tag to an LSU in the processing core. Different resource tags may be configured for different instructions (that is, different resource groups are configured), or different resource tags may be configured for different instructions of a segment of code (that is, a plurality of resource groups are used in a mixed manner).

For example, when the resource tag is configured by using the virtual page attribute, the resource tag may be configured in the virtual page attribute by using software, and the virtual page attribute one-to-one corresponds to a virtual page. A virtual storage unit in a processing core may extract the resource tag in the virtual page attribute and transfer the resource tag to an LSU in the processing core.

For example, when the resource tag is configured by using the redundant bit field of the virtual address or the redundant bit field of the physical address, the resource tag may be configured in the redundant bit field of the virtual address or the physical address by using software, and an access resource group of a virtual address or a physical address is assigned, to implement access to different data, and use different management strategies. The resource tag is encoded in the redundant bit field of the virtual address or the physical address, and one-to-one corresponds to the virtual address or the physical address. An LSU in the processing core may extract the resource tag in the redundant bit field of the virtual address or the physical address.

In this embodiment of this application, the task processing apparatus can control, at a granularity of a resource tag, the resource used for the task information corresponding to each resource tag. In this way, when different resource tags correspond to task instances in different task scenarios or different phases of a same task, fine-granularity resource management and control can be provided for the different task scenarios or the different phases of the same task, to ensure QoS of the task, improve resource scheduling rationality and system energy efficiency, and further improve task processing performance.

Another aspect of this application further provides an electronic device. As shown in FIG. 8, the electronic device includes a memory and a task processing apparatus. The task processing apparatus may be the task processing apparatus provided above. The memory is configured to store computer instructions. The task processing apparatus is configured to execute the computer instructions, to enable the electronic device to implement any task processing method provided above.

It may be understood that all related content in the foregoing apparatus embodiments may be cited in the embodiment of the task processing method and the embodiment of the electronic device. Details are not described herein again in embodiments of this application.

In the several embodiments provided in this application, it should be understood that the disclosed apparatus and method may be implemented in other manners. For example, the described apparatus embodiment is merely an example. For example, the division into modules or units is merely logical function division. During actual implementation, another division manner may be used. For example, a plurality of units or components may be combined or integrated into another apparatus, or some features may be ignored or not performed.

The units described as separate parts may or may not be physically separate, and parts displayed as units may be one or more physical units, and may be located in one place, or may be distributed on a plurality of different places. A part or all of the units may be selected based on actual requirements to achieve the objectives of the solutions in embodiments.

When being implemented in a form of a software functional unit and sold or used as an independent product, the integrated unit may be stored in a readable storage medium. The readable storage medium may include any medium that can store program code, such as a USB flash drive, a removable hard disk drive, a read-only memory, a random access memory, a magnetic disk, or an optical disc. Based on such an understanding, the technical solutions in embodiments of this application essentially, or the part contributing to the conventional technology, or all or a part of the technical solutions may be embodied in a form of a software product.

In another embodiment of this application, a readable storage medium is further provided. The readable storage medium stores computer-executable instructions. When a device (which may be a single-chip microcomputer, a chip, or the like) or a processor performs the steps in the foregoing method embodiments.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions, to enable the device to perform the steps in the foregoing method embodiments.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A task processing apparatus, wherein the task processing apparatus comprises:
at least one processing core, configured to output a plurality of resource tags corresponding to a plurality of task instances, wherein each resource tag identifies at least one task instance that uses a same resource;
a first storage apparatus, configured to: cache a plurality of pieces of task information corresponding to the plurality of resource tags, and determine a storage parameter of each of the plurality of pieces of task information, wherein task information corresponding to each resource tag comprises information about the at least one task instance identified by the resource tag; and
a control apparatus, configured to output control information of any piece of task information in the plurality of pieces of task information, wherein the control information is used to adjust a storage parameter of the task information, and the storage parameter comprises at least one of the following: a miss rate, an access bandwidth, an access delay, a total occupied capacity, and a probability of being replaced.

2. The task processing apparatus according to claim 1, wherein
the at least one processing core is further configured to output a plurality of load and store instructions that carry the plurality of resource tags; and
the first storage apparatus is configured to: transmit and cache, according to the plurality of load and store instructions, the plurality of pieces of task information corresponding to the plurality of resource tags.

3. The task processing apparatus according to claim 1 or 2, wherein the at least one processing core comprises a first processing core, the first storage apparatus comprises a first cache apparatus coupled to the first processing core, and the first cache apparatus comprises:
a first cache, configured to cache at least one piece of task information, wherein the at least one piece of task information comprises task information corresponding to a resource tag output by the first processing core;
a first monitor, configured to detect a storage parameter of each piece of task information in the at least one piece of task information in the first cache; and
a first actuator, configured to adjust a storage parameter of first task information in the first cache based on first control information, wherein the first control information is output by the control apparatus for the first task information, and the at least one piece of task information comprises the first task information.

4. The task processing apparatus according to claim 3, wherein the at least one processing core further comprises a second processing core, the first storage apparatus further comprises a second cache apparatus coupled to both the first processing core and the second processing core, and the second cache apparatus comprises:
a second cache, configured to cache at least two pieces of task information, wherein the at least two pieces of task information comprise task information corresponding to resource tags output by the first processing core and the second processing core;
a second monitor, configured to detect a storage parameter of each of the at least two pieces of task information in the second cache; and
a second actuator, configured to adjust a storage parameter of second task information in the second cache based on second control information, wherein the second control information is output by the control apparatus for the second task information, and the at least two pieces of task information comprise the second task information.

5. The task processing apparatus according to claim 4, wherein the first cache apparatus is coupled to the second cache apparatus via an interconnection apparatus;
the interconnection apparatus is configured to: transmit the at least two pieces of task information, and determine a transmission parameter of each of the at least two pieces of task information; and
the control apparatus is further configured to output third control information of third task information in the at least two pieces of task information, wherein the third control information is used to control a transmission parameter of the third task information in the interconnection apparatus, the at least two pieces of task information further comprise the third task information, and the transmission parameter comprises at least one of the following: an access bandwidth and an access delay.

6. The task processing apparatus according to claim 5, wherein the interconnection apparatus comprises:
a bus, configured to transmit the at least two pieces of task information;
a third monitor, configured to determine a transmission parameter of each of the at least two pieces of task information on the bus; and
a third actuator, configured to adjust a transmission parameter of the third task information on the bus based on the third control information.

7. The task processing apparatus according to any one of claims 1 to 6, wherein the first storage apparatus is configured to be coupled to a second storage apparatus;
the second storage apparatus is configured to: store running information, wherein the running information comprises the task information corresponding to the plurality of resource tags; and determine a storage parameter of the task information corresponding to each of the plurality of resource tags; and
the control apparatus is further configured to adjust a storage parameter, in the second storage apparatus, of task information corresponding to any one of the plurality of resource tags.

8. The task processing apparatus according to any one of claims 1 to 7, wherein
the at least one processing core is further configured to configure a resource tag for each of the plurality of task instances, wherein the resource tag of each task instance is implemented by configuring at least one of the following: a thread, a control register, an encoding field of an instruction, a redundant bit field of a virtual address, a redundant bit field of a physical address, and a virtual page attribute.

9. The task processing apparatus according to claim 8, wherein when a same task instance corresponds to at least two resource tags, the at least two resource tags have different priorities.

10. A task processing method, applied to a task processing apparatus that comprises at least one processing core, a first storage apparatus, and a control apparatus, wherein the method comprises:
outputting, by the at least one processing core, a plurality of resource tags corresponding to a plurality of task instances, wherein each resource tag identifies at least one task instance that uses a same resource;
caching, by the first storage apparatus, a plurality of pieces of task information corresponding to the plurality of resource tags, and determining a storage parameter of each of the plurality of pieces of task information, wherein task information corresponding to each resource tag comprises information about the at least one task instance identified by the resource tag; and
outputting, by the control apparatus, control information of any piece of task information in the plurality of pieces of task information, wherein the control information is used to adjust a storage parameter of the task information in the first storage apparatus, and the storage parameter comprises at least one of the following: a miss rate, an access bandwidth, an access delay, a total occupied capacity, and a probability of being replaced.

11. The method according to claim 10, wherein outputting, by the at least one processing core, the plurality of resource tags corresponding to the plurality of task instances comprises: outputting, by the at least one processing core, a plurality of load and store instructions that carry the plurality of resource tags; and
caching, by the first storage apparatus, the plurality of pieces of task information corresponding to the plurality of resource tags comprises: transmitting and caching, by the first storage apparatus according to the plurality of load and store instructions, the plurality of pieces of task information corresponding to the plurality of resource tags.

12. The method according to claim 10 or 11, wherein the at least one processing core comprises a first processing core, the first storage apparatus comprises a first cache apparatus coupled to the first processing core, and the first cache apparatus comprises a first cache, a first monitor, and a first actuator; and caching, by the first storage apparatus, the plurality of pieces of task information corresponding to the plurality of resource tags, and determining the storage parameter of each of the plurality of pieces of task information comprises:
caching, by the first cache, at least one piece of task information, wherein the at least one piece of task information comprises task information corresponding to a resource tag output by the first processing core; and
detecting, by the first monitor, a storage parameter of each piece of task information in the at least one piece of task information in the first cache; and
the method further comprises: adjusting, by the first actuator, a storage parameter of first task information in the first cache based on first control information, wherein the first control information is output by the control apparatus for the first task information, and the at least one piece of task information comprises the first task information.

13. The method according to claim 12, wherein the at least one processing core further comprises a second processing core, the first storage apparatus further comprises a second cache apparatus coupled to both the first processing core and the second processing core, and the second cache apparatus comprises a second cache, a second monitor, and a second actuator; and caching, by the first storage apparatus, the plurality of pieces of task information corresponding to the plurality of resource tags, and determining the storage parameter of each of the plurality of pieces of task information further comprises:
caching, by the second cache, at least two pieces of task information, wherein the at least two pieces of task information comprise task information corresponding to resource tags output by the first processing core and the second processing core; and
detecting, by the second monitor, a storage parameter of each of the at least two pieces of task information in the second cache; and
the method further comprises: adjusting, by the second actuator, a storage parameter of second task information in the second cache based on second control information, wherein the second control information is output by the control apparatus for the second task information, and the at least two pieces of task information comprise the second task information.

14. The method according to claim 13, wherein the first cache apparatus is coupled to the second cache apparatus via an interconnection apparatus; and the method further comprises:
transmitting, by the interconnection apparatus, the at least two pieces of task information, and determining a transmission parameter of each of the at least two pieces of task information; and
outputting, by the control apparatus, third control information of third task information in the at least two pieces of task information, wherein the third control information is used to control a transmission parameter of the third task information in the interconnection apparatus, the at least two pieces of task information further comprise the third task information, and the transmission parameter comprises at least one of the following: an access bandwidth and an access delay.

15. The method according to claim 14, wherein the interconnection apparatus comprises a bus, a third monitor, and a third actuator; and transmitting, by the interconnection apparatus, the at least two pieces of task information, and determining the transmission parameter of each of the at least two pieces of task information comprises:
transmitting, by the bus, the at least two pieces of task information; and
determining, by the third monitor, a transmission parameter of each of the at least two pieces of task information on the bus; and
the method further comprises: controlling, by the third actuator based on the third control information, a resource used for the third task information on the bus.

16. The method according to any one of claims 10 to 15, wherein the first storage apparatus is configured to be coupled to a second storage apparatus; and the method further comprises:
storing, by the second storage apparatus, running information, wherein the running information comprises the task information corresponding to the plurality of resource tags;
determining, by the second storage apparatus, a storage parameter of the task information corresponding to each of the plurality of resource tags; and
adjusting, by the control apparatus, a storage parameter, in the second storage apparatus, of task information corresponding to any one of the plurality of resource tags.

17. The method according to any one of claims 10 to 16, wherein the method further comprises:
configuring, by the at least one processing core, a resource tag for each of the plurality of task instances, wherein the resource tag of each task instance is implemented by configuring at least one of the following: a thread, a control register, an encoding field of an instruction, a redundant bit field of a virtual address, a redundant bit field of a physical address, and a virtual page attribute.

18. The method according to claim 17, wherein when a same task instance corresponds to at least two resource tags, the at least two resource tags have different priorities.

19. An electronic device, wherein the electronic device comprises a memory and a task processing apparatus, the memory is configured to store computer instructions, and the task processing apparatus is configured to execute the computer instructions, to enable the electronic device to implement the task processing method according to any one of claims 10 to 18.

20. A computer-readable storage medium, wherein the computer-readable storage medium stores computer instructions, and when the computer instructions are run on a device, the device is enabled to perform the task processing method according to any one of claims 10 to 18.

21. A computer program product, wherein the computer program product comprises computer instructions, and when the computer instructions are run on a device, the device is enabled to perform the task processing method according to any one of claims 10 to 18.
